# EUROPÄISCHE PATENTANMELDUNG

(11) **EP 4 831 481 A1**
(43) Veröffentlichungstag der Anmeldung: **28.10.2026**
(21) Anmeldenummer: 25171952.2
(22) Anmeldetag: 23.04.2025
(51) Int. Cl.: F03D 17/00

(54) **ÜBERWACHUNGSSYSTEM, WINDKRAFTANLAGE, VERFAHREN UND VERWENDUNG**

(71) Anmelder: MML Service Solutions GmbH, 46487 Wesel (DE)
(72) Erfinder: Meimann, Valentin, 48429 Rheine (DE)
(74) Vertreter: advotec.

(57) **Zusammenfassung**

Die Erfindung betrifft ein Überwachungssystem (17) und ein Verfahren zur Überwachung eines Zustands eines Rotorblattlagers (14) und/oder Azimutlagers bei einer Windkraftanlage sowie eine Verwendung eines Überwachungssystems, umfassend zumindest einen Sensor (KSM1), welcher an einem ersten Ringelement (15) des Lagers, welches bezüglich eines zweiten Ringelements (16) des Lagers drehbar ist, anordbar ist, wobei mittels des Sensors während einer Drehung des ersten Ringelements bezüglich des zweiten Ringelements Schwingungen in dem Lager erfassbar sind, wobei anhand einer Analyse der erfassten Schwingungen der Zustand des Lagers ermittelbar ist.

## Beschreibung

Die Erfindung betrifft ein Überwachungssystem zur Überwachung eines Zustands eines Rotorblattlagers und/oder Azimutlagers bei einer Windkraftanlage, umfassend zumindest einen Sensor, welcher an einem ersten Ringelement des Lagers, welches bezüglich eines zweiten Ringelements des Lagers drehbar ist, anordbar ist, wobei mittels des Sensors während einer Drehung des ersten Ringelements bezüglich des zweiten Ringelements Schwingungen in dem Lager erfassbar sind, wobei anhand einer Analyse der erfassten Schwingungen der Zustand des Lagers ermittelbar ist.

Weiter betrifft die Erfindung eine Windkraftanlage, umfassend einen Turm, eine an dem Turm angeordnete Gondel, ein Azimutlager, über welches die Gondel drehbar an dem Turm gelagert ist, und einen Rotor, wobei der Rotor eine Rotornabe, zumindest ein an der Rotornabe angeordnetes Rotorblatt und zumindest ein Rotorblattlager umfasst, über welches das Rotorblatt drehbar an der Rotornabe gelagert ist, wobei die Windkraftanlage ein derartiges Überwachungssystem umfasst.

Weiter betrifft die Erfindung ein erstes Verfahren zur Überwachung eines Zustands eines Rotorblattlagers und/oder Azimutlagers bei einer Windkraftanlage unter Verwendung eines Impulshammers oder unter Verwendung eines sonstigen Massenelements mit einem bestimmten Gewicht und gegebenenfalls einer bestimmten Oberflächenbeschaffenheit.

Weiter betrifft die Erfindung ein zweites Verfahren zur Überwachung eines Zustands eines Rotorblattlagers und/oder Azimutlagers bei einer Windkraftanlage mittels eines Überwachungssystems, wobei mittels zumindest eines Sensors des Überwachungssystems, welcher an einem ersten Ringelement des Lagers, welches bezüglich eines zweiten Ringelements des Lagers drehbar ist, angeordnet ist, während einer Drehung des ersten Ringelements bezüglich des zweiten Ringelements Schwingungen in dem Lager erfasst werden, wobei anhand einer Analyse der erfassten Schwingungen der Zustand des Lagers ermittelt wird.

Weiter betrifft die Erfindung eine Verwendung eines Überwachungssystems zur Überwachung eines Zustands eines Rotorblattlagers und/oder Azimutlagers bei einer Windkraftanlage, umfassend zumindest einen Sensor, welcher an einem ersten Ringelement des Lagers, welches bezüglich eines zweiten Ringelements des Lagers drehbar ist, anordbar ist, wobei mittels des Sensors während einer Drehung des ersten Ringelements bezüglich des zweiten Ringelements Schwingungen in dem Lager erfassbar sind, wobei anhand einer Analyse der erfassten Schwingungen der Zustand des Lagers ermittelbar ist.

Eine Windkraftanlage ist aus dem Stand der Technik hinlänglich bekannt. Sie umfasst typischerweise einen Turm, eine auf dem Turm angeordnete Gondel und einen Rotor, wobei der Rotor eine Rotornabe und in der Regel zwei oder drei an der Rotomabe angeordnete Rotorblätter umfasst. Um zur Regulierung einer Leistung der Windkraftanlage einen Anstellwinkel eines Rotorblatts bezüglich der Rotornabe verstellen zu können, umfasst der Rotor üblicherweise je Rotorblatt ein regelmäßig als ein Wälzlager ausgebildetes Rotorblattlager, welches auch als Pitchlager bezeichnet wird, über das das Rotorblatt drehbar an der Rotornabe gelagert ist. Das Wälzlager seinerseits umfasst typischerweise ein erstes Ringelement, ein zweites Ringelement sowie zwischen dem ersten Ringelement und dem zweiten Ringelement angeordnete Wälzkörper. Dabei ist das erste Ringelement bezüglich des bezüglich der Rotornabe feststehenden zweiten Ringelements drehbar, so dass der Anstellwinkel des Rotorblatts bei dem an dem ersten Ringelement befestigten Rotorblatt durch eine Drehung des ersten Ringelements bezüglich des zweiten Ringelements verstellbar ist. Zu einer Ausführung der Drehung des Rotorblatts umfasst der Rotor üblicherweise je Rotorblattlager mindestens einen Pitchantrieb, der hydraulisch und/oder elektrisch ausgeführt sein kann.

Im Laufe eines Betriebs der Windkraftanlage kommt es zu Verschleißerscheinungen, insbesondere Schäden, oder sonstigen Auffälligkeiten bei einem derartigen Rotorblattlager. Zu nennen sind hier vor allem False Brinelling, auf Deutsch auch Stillstandsmarkierung, Muldenbildung oder Riffelbildung genannt, Korrosion, Rissbildung sowie Ermüdung und Verschleiß im Allgemeinen. Es ist daher aus dem Stand der Technik bekannt, einen Zustand des Rotorblattlagers mittels eines Überwachungssystems zu überwachen, um Verschleißerscheinungen, insbesondere Schäden, oder sonstige Auffälligkeiten bei dem Rotorblattlager festzustellen. Beispielsweise geht aus der EP 3 511 562 B1 ein Verfahren zur Überwachung eines Zustands eines Rotorblattlagers bei einer Windkraftanlage mittels eines Überwachungssystems hervor, wobei ein erstes Ringelement des Rotorblattlagers bezüglich eines zweiten Ringelements des Lagers gedreht wird, wobei mittels an dem ersten Ringelement und dem zweiten Ringelement angeordneten Sensoren des Überwachungssystems Schwingungen in dem Lager während der Drehung des ersten Ringelements bezüglich des zweiten Ringelements erfasst werden, wobei anhand einer Analyse der erfassten Schwingungen der Zustand des Lagers ermittelt wird. Bei der Analyse der erfassten Schwingungen wird eine Amplitude der Schwingungen in Abhängigkeit einer Frequenz der Schwingungen, welche sich aus einer schnellen Fourier-Transformation (FFT) der erfassten Schwingungen ergibt, mit einem Schwellenwert verglichen. Wenn die Amplitude in einem Frequenzbereich, insbesondere von 0 Hz bis 100 Hz, für fast alle Frequenzen des Frequenzbereichs über dem Schwellenwert liegt, wird das Rotorblattlager als beschädigt erkannt. Nachteilhaft bei diesem Verfahren ist, dass eine Winkelposition einer festgestellten Verschleißerscheinung, insbesondere Schaden, oder sonstigen Auffälligkeit bezogen auf das Rotorblattlager mittels dieses Verfahrens nicht bestimmt werden kann. Weiter ist eine derartige Analyse der erfassten Schwingungen im Frequenzbereich bei einem Rotorblattlager, bei welchem es sich um ein langsam laufendes Lager handelt, nur bedingt aussagekräftig und ermöglicht daher keine präzise Ermittlung des Zustands des Lagers.

Der Erfindung liegt daher die Aufgabe zugrunde, ein Überwachungssystem, eine Windkraftanlage, Verfahren und eine Verwendung vorzuschlagen, welches bzw. welche eine verbesserte Überwachung eines Zustands eines Rotorblattlagers und/oder Azimutlagers bei einer Windkraftanlage ermöglicht bzw. ermöglichen.

Diese Aufgabe wird durch ein Überwachungssystem mit den Merkmalen des Anspruchs 1, eine Windkraftanlage mit den Merkmalen des Anspruchs 7, ein Verfahren mit den Merkmalen des Anspruchs 8, ein Verfahren mit den Merkmalen des Anspruchs 10 und eine Verwendung mit den Merkmalen des Anspruchs 15 gelöst.

Das erfindungsgemäße Überwachungssystem zur Überwachung eines Zustands eines Rotorblattlagers und/oder Azimutlagers bei einer Windkraftanlage umfasst zumindest einen Sensor, welcher an einem ersten Ringelement des Lagers, welches bezüglich eines zweiten Ringelements des Lagers drehbar ist, anordbar ist, wobei mittels des Sensors während einer Drehung des ersten Ringelements bezüglich des zweiten Ringelements Schwingungen in dem Lager erfassbar sind, wobei anhand einer Analyse der erfassten Schwingungen der Zustand des Lagers ermittelbar ist, wobei mittels des Sensors ein Drehwinkel des ersten Ringelements erfassbar ist.

Das Überwachungssystem dient zur Überwachung eines Zustands (Condition-Monitoring) eines Rotorblattlagers und/oder Azimutlagers bei einer Windkraftanlage. Ein Rotorblattlager, welches auch als Pitchlager bezeichnet wird, dient zur drehbaren Lagerung eines Rotorblatts eines Rotors der Windkraftanlage an einer Rotornabe des Rotors. Genauer gesagt dient es zur Verstellung eines Anstellwinkels des Rotorblatts bezüglich der Rotornabe zur Regulierung einer Leistung der Windkraftanlage. Ein Azimutlager, welches auch als Yawlager bezeichnet wird, dient zur drehbaren Lagerung einer Gondel der Windkraftanlage an einem Turm der Windkraftanlage. Genauer gesagt dient es zur Drehung der Gondel bezüglich des Turms, um den Rotor optimal zu einer Windrichtung auszurichten. Das Rotorblattlager bzw. Azimutlager wird in dieser Offenbarung auch nur kurz "Lager" genannt. Demnach bezieht sich der Begriff "Lager" auf beide Lagertypen. Die Überwachung kann einmalig, wiederkehrend oder permanent erfolgen. Bei der Überwachung des Zustands des Lagers kann der Zustand des Lagers festgestellt werden. Insbesondere kann festgestellt werden, ob das Lager eine Verschleißerscheinung, insbesondere Schaden, oder eine sonstige Auffälligkeit aufweist. Insbesondere kann festgestellt werden, ob eine Abweichung von einem Referenzzustand vorliegt. Diese kann auf einem Schaden oder einer Verschleißerscheinung beruhen. Das Lager umfasst ein erstes Ringelement und ein zweites Ringelement, wobei das erste Ringelement bezüglich des zweiten Ringelements drehbar ist. Das erste Ringelement kann einen Innenring des Lagers und das zweite Ringelement kann einen Außenring des Lagers ausbilden oder umgekehrt. Das zweite Ringelement kann feststehen. Bei einem Rotorblattlager kann an dem ersten Ringelement ein Rotorblatt eines Rotors der Windkraftanlage befestigt sein, wobei das zweite Ringelement bezüglich einer Rotornabe des Rotors feststehen kann. Bei einem Azimutlager kann an dem ersten Ringelement eine Gondel der Windkraftanlage befestigt sein, wobei das zweite Ringelement bezüglich eines Turm der Windkraftanlage feststehen kann. Zwischen dem ersten Ringelement und dem zweiten Ringelement können Wälzkörper des Lagers angeordnet sein. Weiter kann das Lager einen Käfig umfassen. Das Lager kann ein Wälzlager sein. Der Sensor ist zumindest an dem ersten Ringelement anordbar bzw. befestigbar. Grundsätzlich kann der Sensor auch an dem zweiten Ringelement anordbar bzw. befestigbar sein. Beispielsweise kann der Sensor mittels zumindest eines Magneten an dem Lager, insbesondere an dem ersten Ringelement und/oder zweiten Ringelement, anordbar bzw. befestigbar sein. Der Sensor ist dazu eingerichtet, während einer Drehung des ersten Ringelements bezüglich des zweiten Ringelements Schwingungen bzw. Vibrationen in dem Lager zu erfassen bzw. detektieren. Anhand einer Analyse der erfassten Schwingungen bzw. Vibrationen, insbesondere Schwingungsanalyse, insbesondere Betriebsschwingungsanalyse, bzw. Vibrationsanalyse, ist der Zustand des Lagers ermittelbar. So kann bei der Drehung des ersten Ringelements bezüglich des zweiten Ringelements bei jedem Überrollen eines auf einer Lauffläche des ersten Ringelements und/oder des zweiten Ringelements vorhandenen Schadens mittels eines Wälzkörpers des Lagers und/oder bei jedem Kontakt eines an einer Oberfläche eines Wälzkörpers vorhandenen Schades mit dem ersten Ringelement und/oder zweiten Ringelement ein Impuls bzw. Kraftstoß auf das Lager erzeugt werden, welcher zu vergleichsweise erhöhten Schwingungen bzw. Vibrationen in dem Lager führt, welche mittels des Sensors erfassbar sind. Weiter ist der Sensor dazu eingerichtet einen Drehwinkel des ersten Ringelements, insbesondere in Bezug auf das zweite Ringelement, zu erfassen bzw. detektieren. Ein zusätzlicher Sensor zur Erfassung des Drehwinkels ist daher nicht erforderlich. Der Drehwinkel kann anhand einer Erfassung einer Änderung eines Neigungswinkels erfassbar sein. Demnach kann der Sensor dazu eingerichtet sein, einen Neigungswinkel, insbesondere gegenüber einer Richtung einer Gravitationskraft, zu erfassen bzw. detektieren. Werden nun mittels des an dem ersten Ringelement angeordneten Sensors die Schwingungen in dem Lager während der Drehung des ersten Ringelements bezüglich des zweiten Ringelements erfasst, so kann eine Amplitude der Schwingungen, insbesondere eine Amplitude einer Schwingbeschleunigung, in Abhängigkeit des Drehwinkels, das heißt als eine Funktion des Drehwinkels, erfasst werden. Dies ermöglicht für jede Winkelposition in Bezug auf das Lager einen Vergleich der Amplitude mit einem Schwellenwert. Dadurch, dass die Amplitude bei einer bestimmten Winkelposition oder in einem bestimmten Winkelpositionsbereich über dem Schwellenwert liegt, kann festgestellt werden, dass das Lager bei der bestimmten Winkelposition oder in dem bestimmten Winkelpositionsbereich eine Verschleißerscheinung, insbesondere Schaden, oder sonstige Auffälligkeit aufweist. Demnach ermöglicht der Sensor nicht nur eine Feststellung bzw. Erkennung einer Verschleißerscheinung, insbesondere Schaden, oder sonstigen Auffälligkeit, sondern auch eine Bestimmung einer Winkelposition der Verschleißerscheinung, insbesondere Schaden, oder sonstigen Auffälligkeit anhand der Zuordenbarkeit einer den Schwellenwert überschreitenden Amplitude oder eines Bereichs, in dem die Amplitude den Schwellenwert überschreitet, zu einer bestimmten Winkelposition, bei dem die Amplitude den Schwellenwert überschreitet, oder zu einem bestimmten Winkelpositionsbereich, in dem die Amplitude über den Bereich den Schwellenwert überschreitet. Die Amplitude in Abhängigkeit der Winkelposition kann in Form eines Orbitdiagramms dargestellt werden, anhand dessen ein Vorhandensein einer Verschleißerscheinung, insbesondere Schaden, oder sonstige Auffälligkeit und eine Winkelposition der vorhandenen Verschleißerscheinung, insbesondere Schaden, oder sonstigen Auffälligkeit ganz einfach abgelesen werden kann. Der Schwellenwert kann in dem Orbitdiagramm als eine Kreislinie dargestellt werden. Eine derartige Analyse der erfassten Schwingungen im Winkelbereich weist bei einem Rotorblattlager bzw. Azimutlager, bei welchem es sich um ein langsam laufendes Lager handelt, eine hohe Aussagekraft auf und ermöglicht daher eine präzise Ermittlung des Zustands des Lagers. Weiter kann mittels des Sensors durch eine Erfassung des Neigungswinkels eine Verkippung des Lagers, insbesondere des ersten Ringelements und zweiten Ringelements relativ zueinander, bestimmt werden. Anhand der Verkippung kann ein Verschleiß des Lagers erkannt werden oder eine Verschleißentwicklungsbewertung vorgenommen werden. Das Überwachungssystem ermöglicht daher insgesamt eine verbesserte Überwachung eines Zustands eines Rotorblattlagers und/oder Azimutlagers bei einer Windkraftanlage.

Das Überwachungssystem, insbesondere der Sensor, ist insbesondere dazu geeignet, um
- Schädigungen an einem Innenring eines Rotorblattlagers und/oder Außenring des Rotorblattlagers zu erkennen und eine Position der Schädigungen zu lokalisieren, wobei beispielsweise auch Risse erkannt werden können, die nicht nur an einer Laufbahn des Lagers, sondern auch an einer anderen Stelle des Lagers entstanden sind,
- Schädigungen an Wälzkörpern eines Rotorblattlagers anhand von Überrollfrequenzen der Wälzkörper zu erkennen,
- Schädigungen an einem Innenring eines Azimutlagers und/oder Außenrings des Azimutlagers zu erkennen und eine Position der Schädigungen zu lokalisieren,
- Schädigungen an Wälzkörpern eines Azimutlagers anhand von Überrollfrequenzen der Wälzkörper zu erkennen,
- Stick-Slip-Effekte an einem Azimutbremssystem zu erkennen,
- Abweichungen an einer Oberfläche einer Azimutbremsscheibe (Unebenheit und problematische Rauheit, welche in der Regel zu starken Geräuschen und Vibrationen sowie zu konsequenten Schäden führen) zu erkennen,
- Abweichungen und Ausrichtefehler von einzelnen Azimutbremskalibern zu erkennen und ein Bremssattel mit Abweichungen zu identifizieren,
- Schäden eines Azimutantriebs (Lager und Verzahnungen) zu erkennen,
- Schäden eines Pitchantriebs (Lager und Verzahnungen) zu erkennen.

In einer bevorzugten Ausführungsform kann der Sensor als ein Beschleunigungssensor ausgebildet sein, wobei der Beschleunigungssensor ein Gehäuse und zumindest drei in dem Gehäuse angeordnete Beschleunigungssensormittel zur Erfassungen von Beschleunigungen bezüglich dreier Achsen aufweisen kann. Demnach kann der Beschleunigungssensor zumindest ein erstes Beschleunigungssensormittel zur Erfassung einer ersten Beschleunigung bezüglich einer ersten Achse, ein zweites Beschleunigungssensormittel zur Erfassung einer zweiten Beschleunigung bezüglich einer zweiten Achse und ein drittes Beschleunigungssensormittel zur Erfassung einer dritten Beschleunigung bezüglich einer dritten Achse aufweisen. Mit anderen Worten kann der Beschleunigungssensor ein dreiachsiger Beschleunigungssensor sein. Es ist auch denkbar, dass der Beschleunigungssensor ein einachsiger oder zweiachsiger Beschleunigungssensor ist. Die drei Achsen, das heißt die erste Achse, die zweite Achse und die dritte Achse, können ein kartesisches Koordinatensystem bilden. Der Sensor kann derart an dem Lager, insbesondere dem ersten Ringelement und/oder zweiten Ringelement, anordbar sein, dass mittels des Sensors eine Radialbeschleunigung, das heißt eine Beschleunigung in einer radialen Richtung des Lagers, eine Tangentialbeschleunigung, das heißt eine Beschleunigung in einer tangentialen Richtung des Lagers, und eine Axialbeschleunigung, das heißt eine Beschleunigung in einer axialen Richtung des Lagers, erfassbar sein kann. Die erste Beschleunigung kann die Radialbeschleunigung, die zweite Beschleunigung kann die Tangentialbeschleunigung und die dritte Beschleunigung kann die Axialbeschleunigung sein. Die Beschleunigungen können Schwingbeschleunigungen sein. Die Erfassung des Drehwinkels kann mittels eines dazu vorgesehenen Beschleunigungssensormittels des Sensors, insbesondere mittels des ersten Beschleunigungssensormittels, zweiten Beschleunigungssensormittels oder dritten Beschleunigungssensormittels, so dass das zur Erfassung des Drehwinkels vorgesehene Beschleunigungssensormittel neben dem Drehwinkel gleichzeitig die Schwingungen bzw. Vibrationen erfassen kann, oder eines vierten Beschleunigungssensormittels des Sensors, welches ausschließlich zur Erfassung des Drehwinkels vorgesehen sein kann, erfolgen. Auch das vierte Beschleunigungssensormittel kann in dem Gehäuse angeordnet sein. Das vierte Beschleunigungssensormittel kann zur Erfassung einer Radialbeschleunigung, Tangentialbeschleunigung oder Radialbeschleunigung eingerichtet sein. Die Erfassung des Drehwinkels kann anhand einer Erfassung einer Änderung einer Ausrichtung des Sensors, insbesondere des zur Erfassung des Drehwinkels vorgesehenen Beschleunigungssensormittels, in Bezug auf eine Richtung einer Gravitationskraft bzw. anhand einer Messung einer Messung einer Änderung der Erdbeschleunigung erfolgen. Der Sensor kann derart an dem Rotorblattlager bzw. Azimutlager anordbar sein, dass mittels des zur Erfassung des Drehwinkels vorgesehenen Beschleunigungssensormittels die Radialbeschleunigung oder Tangentialbeschleunigung bzw. Axialbeschleunigung erfassbar sein kann. Da sämtliche Beschleunigungssensormittel in dem Gehäuse angeordnet sind, ist der Sensor kompakt.

In einer bevorzugten Ausführungsform kann zumindest eines der Beschleunigungssensormittel als MEMS (Micro-Electro-Mechanical Systems)-Sensormittel ausgebildet sein, wobei mittels des MEMS-Sensormittels der Drehwinkel erfassbar sein kann. Die übrigen Beschleunigungssensormittel können als MEMS-Sensormittel und/oder als piezoelektrische Sensormittel, insbesondere IEPE (Integrated Electronic Piezo Electric)-Sensormittel, ausgebildet sein.

In einer bevorzugten Ausführungsform kann der Sensor eine Energieversorgungseinrichtung zur Versorgung des Sensors mit elektrischer Energie aufweisen. Die Energieversorgung ist dann netzunabhängig. Die Energieversorgungseinrichtung kann eine Batterie, insbesondere Langzeitbatterie, und/oder einen, insbesondere induktiv und/oder über Solar aufladbaren, Akkumulator aufweisen. Es ist auch denkbar, dass die Energieversorgungseinrichtung als eine Solaranlage ausgebildet ist.

In einer bevorzugten Ausführungsform kann der Sensor eine Speichereinrichtung zum Speichern von Sensordaten und/oder eine Datenschnittstelleneinrichtung zur, vorzugsweise kabellosen, Übertragung von Sensordaten und/oder eine Auswerteeinrichtung zum Auswerten von Sensordaten aufweisen. Die Sensordaten können die erfassten Schwingungen bzw. Vibrationen beschreiben. Die Sensordaten können mittels der Speichereinrichtung in dem Sensor gespeichert werden und erst nach einer definierten Messdauer, beispielsweise nach einer Demontage des Sensors von dem Lager, ausgelesen und analysiert werden. Die Speichereinrichtung kann auch, insbesondere bei dem an dem Lager montierten Sensor, von dem Sensor entfernbar sein. Beispielsweise kann die Speichereinrichtung eine Speicherkarte, insbesondere SD-Karte, sein. Die Sensordaten können jedoch auch zur Auswertung bzw. Analyse der Sensordaten mittels der Datenschnittstelleneinrichtung an eine, insbesondere stationäre oder mobile, Recheneinheit, insbesondere Computer, Server, Smartphone, Tablet oder dergleichen, übertragen werden. Das Überwachungssystem kann die Recheneinheit umfassen. Die Recheneinheit kann beispielsweise in der Gondel oder in der Rotornabe angeordnet sein. Die Übertragung kann kabellos via Bluetooth, Wifi, Funk oder dergleichen, aber auch kabelgebunden erfolgen. Es ist auch denkbar, dass die Sensordaten mittels der Auswerteeinheit, wie beispielsweise Mikroprozessor und/oder Mikrocontroller, in dem Sensor selbst ausgewertet bzw. analysiert werden. Ergebnisse der Auswertung bzw. Analyse können dann mittels der Datenschnittstelleneinrichtung an die Recheneinheit oder eine externe Datenspeichereinrichtung, welche optional von dem Überwachungssystem umfasst sein kann, übertragen werden. In den Sensor kann eine SIM-Karte einsteckbar sein, um die Sensordaten über Mobilfunk zu übertragen, um so einen komplett autonomen Dauerbetrieb zu erlauben. Die Überwachung kann als Online-Überwachung erfolgen.

Weiter kann mittels des Sensors eine Temperatur, insbesondere Umgebungstemperatur, erfassbar sein. Dadurch kann eine Sensitivität der Beschleunigungssensormittel auf die Temperatur berücksichtigt werden. Die Sensordaten können auch die erfasste Temperatur beschreiben.

Weiter kann der Sensor eine Abtastrate von 1 Hz bis 30000 Hz aufweisen. Die Abtastrate kann beispielsweise zwischen 125 Hz, 250 Hz, 500 Hz, 1000 Hz, 2000 Hz und 4000 Hz oder anderen Werten auswählbar sein. Diese Abtastrate ist zur Überwachung des langsam laufenden Lagers besonders gut geeignet.

In einer bevorzugten Ausführungsform kann das Überwachungssystem zumindest einen weiteren Sensor zur Erfassung der Schwingungen umfassen, welcher an dem zweiten Ringelement anordbar sein kann, wobei vorzugsweise der weitere Sensor übereinstimmend mit dem Sensor ausgebildet sein kann. Insofern können sämtliche Ausführungen betreffend den Sensor auf den weiteren Sensor übertragen werden. Jedoch ist es nicht erforderlich, dass mittels des weiteren Sensors ein Drehwinkel erfassbar ist, da das zweite Ringelement, an welchem der weitere Sensor anordbar sein kann, fest steht.

Das Überwachungssystem kann nur einen einzigen Sensor umfassen, insbesondere, wenn das Lager ein Azimutlager ist. Das Überwachungssystem kann zumindest zwei Sensoren umfassen, insbesondere, wenn das Lager ein Rotorblattlager ist. Ein Sensor kann dann an dem ersten Ringelement und ein weiterer Sensor kann dann an dem zweiten Ringelement anordbar sein. Die Sensoren können auch beide an dem ersten Ringelement anordbar sein. Die Positionierung bzw. Anordnung des Sensors bzw. der Sensoren an dem Lager, insbesondere Rotorblattlager, kann in Abhängigkeit von Lastzonen, welche insbesondere von einer Ausrichtung einer Längsachse eines an dem ersten Ringelement befestigten Rotorblatts abhängen können, erfolgen.

Weitere vorteilhafte Ausführungsformen des Überwachungssystems ergeben sich aus den Merkmalsbeschreibungen der auf den Anspruch 10 rückbezogenen Unteransprüche

Eine Anordnung zur Überwachung eines Zustands eines Rotorblattlagers und/oder Azimutlagers bei einer Windkraftanlage kann ein erfindungsgemäßes Überwachungssystem und das Lager umfassen, wobei das Lager ein erstes Ringelement und ein zweites Ringelement aufweisen kann, wobei das erste Ringelement bezüglich des zweiten Ringelements drehbar sein kann, wobei zumindest ein Sensor des Überwachungssystems an dem ersten Ringelement angeordnet sein kann.

Zu den vorteilhaften Wirkungen der Anordnung wird auf die Vorteilsbeschreibung des erfindungsgemäßen Überwachungssystems verwiesen.

Weitere vorteilhafte Ausführungsformen der Anordnung ergeben sich aus den Merkmalsbeschreibungen der auf den Anspruch 1 und 10 rückbezogenen Unteransprüche

Die erfindungsgemäße Windkraftanlage umfasst einen Turm, eine an dem Turm angeordnete Gondel, ein Azimutlager, über welches die Gondel drehbar an dem Turm gelagert ist, und einen Rotor, wobei der Rotor eine Rotornabe, zumindest ein an der Rotornabe angeordnetes Rotorblatt und zumindest ein Rotorblattlager umfasst, über welches das Rotorblatt drehbar an der Rotornabe gelagert ist, wobei die Windkraftanlage ein erfindungsgemäßes Überwachungssystem umfasst.

Zu den vorteilhaften Wirkungen der erfindungsgemäßen Windkraftanlage wird auf die Vorteilsbeschreibung des erfindungsgemäßen Überwachungssystems verwiesen.

Das Lager und das Überwachungssystem können eine Anordnung ausbilden.

In einer bevorzugten Ausführungsform kann die Windkraftanlage mindestens einen Pitchantrieb zur Ausführung einer Drehung des Rotorblatts und/oder einen Azimutantrieb zur Ausführung einer Drehung der Gondel umfassen. Die Anordnung kann den Pitchantrieb und/oder den Azimutantrieb umfassen. Die Antriebe können jeweils hydraulisch und/oder elektrisch ausgelegt sein.

Weitere vorteilhafte Ausführungsformen der Windkraftanlage ergeben sich aus den Merkmalsbeschreibungen der auf den Anspruch 1 und 10 rückbezogenen Unteransprüche.

Bei dem ersten erfindungsgemäßen Verfahren zur Überwachung eines Zustands eines Rotorblattlagers und/oder Azimutlagers bei einer Windkraftanlage wird, vorzugsweise während einer Nichtdrehung eines ersten Ringelements des Lagers, welches bezüglich eines zweiten Ringelements des Lagers drehbar ist, bezüglich des zweiten Ringelements zur Anregung von Schwingungen in dem Lager mittels eines Impulshammers ein Impuls in das Lager eingeleitet, wobei mittels zumindest eines an dem Lager angeordneten Sensors die Schwingungen erfasst werden, wobei anhand einer Analyse der erfassten Schwingungen der Referenzzustand des Lagers ermittelt wird.

Demnach kann, vorzugsweise während einer Nichtdrehung des ersten Ringelements bezüglich des zweiten Ringelements, das heißt während ein Rotorblatt und/oder eine Gondel still steht, zur Anregung von Schwingungen in dem Lager mittels eines Impulshammers ein Impuls bzw. Kraftstoß in das Lager, insbesondere in das erste Ringelement und/oder das zweite Ringelement, eingeleitet werden. Diese sehr kurze zeitliche Anregung kann ein breites Frequenzspektrum erzeugen. Dabei kann gleichzeitig oder nachfolgend eine Mehrzahl von Impulsen, insbesondere an verschiedenen Positionen des Lagers, in das Lager eingeleitet werden. Die Schwingungen werden mittels zumindest eines an dem Lager, insbesondere an dem ersten Ringelement und/oder zweiten Ringelement, angeordneten Sensors erfasst. Anhand einer Analyse der erfassten Schwingungen bzw. einer Impulsantwort wird der Zustand des Lagers ermittelt. Ein derartiges Verfahren wird als Impulshammertest (Impact Hammer Test) oder noch allgemeiner als Modalanalyse bezeichnet. Alternativ wäre auch eine Anregung von Schwingungen in dem Lager mittels eines, insbesondere hydraulischen, Shakers oder einer sonstigen externen Anregungseinrichtung denkbar.

In einer bevorzugten Ausführungsform kann bei Analyse der erfassten Schwingungen zumindest eine Eigenfrequenz des Lagers bestimmt werden. Da die Eigenfrequenz von dem Zustand des Lagers abhängt und sich infolge einer, insbesondere weiteren, Beschädigung des Lagers ändert bzw. verschiebt, kann anhand der Eigenfrequenz auf den Zustand des Lagers geschlossen werden. Die Eigenfrequenz kann anhand einer Übertragungsfunktion bestimmt werden. Die Berechnung der Übertragungsfunktion kann beispielsweise dadurch erfolgen, dass Fourier-transformierte (FFT) Spektren der Impulsantwort und des Impulses gebildet werden und diese durcheinander dividiert werden. Neben der Eigenfrequenz können weitere Modalparameter anhand der Schwingungen bzw. Impulsantwort bestimmt werden und zur Feststellung des Zustands des Lagers herangezogen werden.

Die Eigenfrequenz kann mit einem Referenzwert verglichen werden. Wenn die Eigenfrequenz von dem Referenzwertabweicht, kann daraus geschlossen werden, dass das Lager eine Beschädigung aufweist. Eine Position, insbesondere Winkelposition, der Beschädigung in Bezug auf das Lager kann durch eine geeignete Anordnung des Sensors an dem Lager bestimmt werden. Der Referenzwert kann ebenfalls mittels des ersten Verfahrens, insbesondere bei einem Neuzustand bzw. beschädigungsfreien Zustand des Lagers, bestimmt worden sein. Durch den Vergleich mit dem Referenzwert können, insbesondere zusätzliche, intrinsische Schäden innerhalb des Wälzlagers, insbesondere des ersten Ringelements und/oder des zweiten Ringelements und/oder der Wälzkörper und/oder des Käfigs, erkannt werden, insbesondere auch dann, wenn das Lager noch keine in einem Hüllkurvenspektrum erkennbare auf Bauteilen des Lagers zumindest oberflächenseitig vorhandene Schäden, insbesondere auf einer Lauffläche des ersten Ringelements und/oder des zweiten Ringelements und/oder auf einer Oberfläche eines Wälzkörpers, aufweist. Die Eigenfrequenz kann auch als Referenzwert für das nachfolgend beschriebene zweite Verfahren verwendet werden. Der Referenzwert kann auch eine im Rahmen des zweiten Verfahrens bzw. einer Betriebsschwingungsanalyse bestimmte Eigenfrequenz des Lagers sein.

Der Sensor kann der Sensor des Überwachungssystems sein. Zu den vorteilhaften Wirkungen des ersten erfindungsgemäßen Verfahrens wird ergänzend auf die Vorteilsbeschreibung des erfindungsgemäßen Überwachungssystems verwiesen. Weitere vorteilhafte Ausführungsformen des ersten Verfahrens ergeben sich aus den Merkmalsbeschreibungen der auf den Anspruch 1 rückbezogenen Unteransprüche. Der Sensor kann jedoch auch anders ausgebildet sein als der Sensor des Überwachungssystems. Insbesondere ist es nicht erforderlich, dass mittels des Sensors ein Drehwinkel erfassbar ist, da bei dem ersten Verfahren die Erfassung der Schwingungen vorzugsweise während einer Nichtdrehung des ersten Ringelements bezüglich des zweiten Ringelements erfolgt.

Bei dem zweiten erfindungsgemäßen Verfahren zur Überwachung eines Zustands eines Rotorblattlagers und/oder Azimutlagers bei einer Windkraftanlage mittels eines Überwachungssystems werden mittels zumindest eines Sensors des Überwachungssystems, welcher an einem ersten Ringelement des Lagers, welches bezüglich eines zweiten Ringelements des Lagers drehbar ist, angeordnet ist, während einer Drehung des ersten Ringelements bezüglich des zweiten Ringelements Schwingungen in dem Lager erfasst, wobei anhand einer Analyse der erfassten Schwingungen der Zustand des Lagers ermittelt wird, wobei mittels des Sensors ein Drehwinkel des ersten Ringelements erfasst wird.

Zu den vorteilhaften Wirkungen des zweiten erfindungsgemäßen Verfahrens wird auf die Vorteilsbeschreibung des erfindungsgemäßen Überwachungssystems verwiesen.

Bei jedem Überrollen eines auf einer Lauffläche des ersten Ringelements und/oder zweiten Ringelements vorhandenen Schadens mittels eines Wälzkörpers des Lagers und/oder bei jedem Kontakt eines an einer Oberfläche eines Wälzkörpers befindlichen Schades mit dem ersten Ringelement und/oder zweiten Ringelement kann ein das Lager zu Schwingungen anregender Impuls bzw. Kraftstoß auf das Lager erzeugt werden. Mithilfe dieser periodischen Anregung kann ein derartiger auf der Lauffläche und/oder der Oberfläche des Wälzkörpers vorhandener Schaden in einem Hüllkurvenspektrum bzw. in einem Orbitdiagramm erkannt werden.

Eine Geschwindigkeit der Drehung des ersten Ringelements bezüglich des zweiten Ringelements kann von 0,1 °/s bis 30 °/s betragen.

Bei der Drehung des ersten Ringelements bezüglich des zweiten Ringelements kann ein an dem ersten Ringelement befestigtes Rotorblatt eines Rotors der Windkraftanlage mit einer Längsachse des Rotorblatts zumindest nicht parallel zur einer Richtung einer Gravitationskraft ausgerichtet sein. Ein zur Erfassung einer Radialbeschleunigung oder Tangentialbeschleunigung vorgesehenes Beschleunigungssensormittel des Sensors kann dann anhand einer Änderung der gemessenen Erdbeschleunigung aufgrund der Drehung des ersten Ringelements, an welchem der Sensor angeordnet ist, bezüglich des zweiten Ringelements den Drehwinkel erfassen.

Bei dem zweiten Verfahren, insbesondere wenn das Lager ein Rotorblattlager ist, kann der Rotor vorzugsweise still stehen. Der Rotor kann sich bei dem zweiten Verfahren, insbesondere wenn das Lager ein Rotorblattlager ist, alternativ jedoch auch drehen.

In einer bevorzugten Ausführungsform kann bei der Erfassung der Schwingungen eine Schwingbeschleunigung in einer radialen Richtung des Lagers und/oder eine Schwingbeschleunigung in einer axialen Richtung des Lagers und/oder eine Schwingbeschleunigung in einer tangentialen Richtung des Lagers erfasst werden.

In einer bevorzugten Ausführungsform kann bei der Analyse der erfassten Schwingungen eine jeweilige Amplitude der jeweiligen Schwingbeschleunigung in Abhängigkeit einer Winkelposition bezogen auf das Lager mit einem jeweiligen Schwellenwert verglichen werden, wobei dadurch, dass die jeweilige Amplitude den jeweiligen Schwellenwert bei einer bestimmten Winkelposition und/oder in einem bestimmten Winkelpositionsbereich überschreitet, ein Vorhandensein einer Verschleißerscheinung, insbesondere Schaden, an dem Lager bei der bestimmten Winkelposition und/oder in dem bestimmten Winkelpositionsbereich erkannt werden kann.

In einer bevorzugten Ausführungsform kann bei der Analyse der erfassten Schwingungen zumindest eine Eigenfrequenz des Lagers bestimmt und mit einem, vorzugsweise mittels eines Impulshammertests bzw. durch eine Modalanalyse bestimmten, Referenzwert verglichen werden. Bei der Drehung des ersten Ringelements bezüglich des zweiten Ringelements kann ein Überrollen eines auf einer Lauffläche des ersten Ringelements und/oder zweiten Ringelements vorhandenen Schadens mittels eines Wälzkörpers des Lagers und/oder bei jedem Kontakt eines an einer Oberfläche eines Wälzkörpers vorhandenen Schades mit dem ersten Ringelement und/oder zweiten Ringelement jeweils ein das Lager zu Schwingungen anregender Impuls bzw. Kraftstoß auf das Lager erzeugt werden, wobei anhand einer Impulsantwort auf die Impulse die Eigenfrequenz bestimmt werden kann. Auch ein beschädigter Käfig des Lagers kann bei jeder Umdrehung an benachbarten Teilen anstreifen und Impulse erzeugen. Der Referenzwert kann mittels eines Impulshammertests bzw. durch eine Modalanalyse, insbesondere unter kontrollierten Bedingungen, bestimmt werden. Demnach kann, vorzugsweise während einer Nichtdrehung des ersten Ringelements des Lagers bezüglich des zweiten Ringelements, zur Anregung von Schwingungen in dem Lager mittels eines Impulshammers ein Impuls in das Lager eingeleitet werden, wobei mittels zumindest eines an dem Lager angeordneten Sensors die Schwingungen erfasst werden können, wobei anhand einer Analyse der Schwingungen zumindest eine Eigenfrequenz des Lagers als der Referenzwert bestimmt werden kann. Der Referenzwert kann im Rahmen des ersten Verfahrens bestimmt werden. Ergänzend wird daher auf die Beschreibung des ersten Verfahrens verwiesen. Wie bereits ausgeführt, kann bei jedem Überrollen eines auf einer Lauffläche des ersten Ringelements und/oder zweiten Ringelements vorhandenen Schadens mittels eines Wälzkörpers des Lagers und/oder bei jedem Kontakt eines an einer Oberfläche eines Wälzkörpers vorhandenen Schades mit dem ersten Ringelement und/oder zweiten Ringelement ein Impuls bzw. Kraftstoß auf das Lager erzeugt werden. Mithilfe dieser periodischen Anregung kann ein derartiger Schaden auf der Lauffläche und/oder der Oberfläche des Wälzkörpers in einem Hüllkurvenspektrum bzw. in dem Orbitdiagramm erkannt werden. Bei einem Lager, welches frei von derartigen auf den Bauteilen des Lagers zumindest oberflächenseitig vorhandenen Schäden ist, sind die Schwingungen gleichmäßig. Bei einem Lager, welches derartige auf den Bauteilen des Lagers zumindest oberflächenseitig vorhandene Schäden aufweist, sind diese gleichmäßigen Schwingungen durch die periodischen Stöße amplitudenmoduliert, was in dem Hüllkurvenspektrum anhand von Peaks sichtbar ist. Ein, insbesondere zusätzlicher, Schaden innerhalb des ersten Ringelements und/oder zweiten Ringelements, insbesondere ein sich nicht bis zu der Lauffläche erstreckender Riss innerhalb des ersten Ringelements und/oder zweiten Ringelements, und/oder ein Schaden innerhalb eines Wälzkörpers, insbesondere in sich nicht bis zu seiner Oberfläche erstreckender Riss innerhalb eines Wälzkörpers, kann in dem Hüllkurvenspektrum indes regelmäßig nicht erkannt werden, da ein derartiger intrinsischer Schaden im Wesentlichen zu keiner Modulation der Amplitude führt. Jedoch kann bei einem Vorliegen eines auf den Bauteilen des Lagers zumindest oberflächenseitig vorhandenen Schadens, insbesondere auf der Lauffläche des ersten Ringelements und/oder zweiten Ringelements und/oder auf einer Oberfläche eines Wälzkörpers und/oder des Käfigs, anhand einer Impulsantwort auf die von dem Schaden herrührenden Impulse die von dem Zustand des Lagers abhängige Eigenfrequenz bestimmt werden. Da ein, insbesondere zusätzlicher, intrinsischer Schaden des Lagers zu einer Änderung bzw. Verschiebung der Eigenfrequenz führt, kann durch einen Vergleich der Eigenfrequenz mit dem Referenzwert festgestellt werden, ob ein derartiger intrinsischer Schaden des Lagers vorhanden ist oder ein Ausmaß dieses Schadens im Vergleich zu einer der Überwachung vorausgehenden Überwachung zugenommen hat. Der Referenzwert kann also auch aus einer im Rahmen einer vorausgehenden Überwachung durchgeführten Analyse einer Impulsantwort auf von einem insbesondere auf der Lauffläche und/oder der Oberfläche eines Wälzkörpers vorhandenen Schaden induzierte Impulse bestimmt werden. Durch einen Vergleich der Eigenfrequenz mit dem Referenzwert kann dann festgestellt werden, ob ein derartiger intrinsischer Schaden des Lagers vorhanden ist oder ein bei der Bestimmung des Referenzwerts bereits vorhandener derartiger intrinsischer Schaden sich vergrößert hat. Der Impulshammertest kann in regelmäßigen Abständen durchgeführt werden.

In einer bevorzugten Ausführungsform kann das erste Ringelement zumindest um 90°, bevorzugt zumindest um 180 °, besonders bevorzugt um 360°, bezüglich des zweiten Ringelements gedreht werden. Das erste Ringelement kann bevorzugt nur einmal um 360° bezüglich des zweiten Ringelements gedreht werden.

Weitere vorteilhafte Ausführungsformen des zweiten Verfahrens ergeben sich aus den Merkmalsbeschreibungen der auf den Anspruch 1 rückbezogenen Unteransprüche.

Erfindungsgemäß wird ein Überwachungssystem zur Überwachung eines Zustands eines Rotorblattlagers und/oder Azimutlagers bei einer Windkraftanlage verwendet, wobei das Überwachungssystem zumindest einen Sensor, welcher an einem ersten Ringelement des Lagers, welches bezüglich eines zweiten Ringelements des Lagers drehbar ist, anordbar ist, wobei mittels des Sensors während einer Drehung des ersten Ringelements bezüglich des zweiten Ringelements Schwingungen in dem Lager erfassbar sind, wobei anhand einer Analyse der erfassten Schwingungen der Zustand des Lagers ermittelbar ist, wobei mittels des Sensors ein Drehwinkel des ersten Ringelements erfassbar ist.

Zu den vorteilhaften Wirkungen der erfindungsgemäßen Verwendung wird auf die Vorteilsbeschreibung des erfindungsgemäßen Überwachungssystems verwiesen.

Weiter kann das Überwachungssystems zur Überwachung eines Zustands eines Pitchantriebs und/oder Azimutantriebs der Windkraftanlage verwendet werden. Dazu kann der Sensor an dem Rotorblattlager und/oder Azimutlager und/oder auch direkt an dem Pitchantrieb und/oder Azimutantrieb angeordnet werden. Eine Analyse der erfassten Schwingungen kann dann insbesondere in einem Frequenzbereich erfolgen.

Weitere vorteilhafte Ausführungsformen der Verwendung ergeben sich aus den Merkmalsbeschreibungen der auf den Anspruch 1 und Anspruch 10 rückbezogenen Unteransprüche.

Nachfolgend werden bevorzugte Ausführungsformen der Erfindung unter Bezugnahme auf die beigefügten Zeichnungen näher erläutert.

Es zeigen:
- Fig. 1: eine schematische Darstellung einer Windkraftanlage;
- Fig. 2: eine schematische Darstellung eines Rotorblattlagers der Windkraftanlage mit einem daran angeordneten, zwei Sensoren umfassenden Überwachungssystem;
- Fig. 3: eine diagrammatische Darstellung einer mittels der Sensoren erfassten Radialbeschleunigung in Abhängigkeit einer Zeit;
- Fig. 4: ein eine mittels der Sensoren erfasste Radialbeschleunigung in Abhängigkeit einer Winkelposition beschreibendes Orbitdiagramm für ein erstes Rotorblattlager der Windkraftanlage;
- Fig. 5: ein eine mittels der Sensoren erfasste Axialbeschleunigung in Abhängigkeit der Winkelposition beschreibendes Orbitdiagramm für das erste Rotorblattlager;
- Fig. 6: ein eine mittels der Sensoren erfasste Tangentialbeschleunigung in Abhängigkeit der Winkelposition beschreibendes Orbitdiagramm für das erste Rotorblattlager;
- Fig. 7: eine diagrammatische Darstellung einer mittels der Sensoren erfassten Radialbeschleunigung in Abhängigkeit einer Frequenz für das erste Rotorblattlager;
- Fig. 8: ein eine mittels der Sensoren erfasste Radialbeschleunigung in Abhängigkeit einer Winkelposition beschreibendes Orbitdiagramm für ein zweites Rotorblattlager der Windkraftanlage;
- Fig. 9: ein eine mittels der Sensoren erfasste Axialbeschleunigung in Abhängigkeit der Winkelposition beschreibendes Orbitdiagramm für das zweite Rotorblattlager;
- Fig. 10: ein eine mittels der Sensoren erfasste Tangentialbeschleunigung in Abhängigkeit der Winkelposition beschreibendes Orbitdiagramm für das zweite Rotorblattlager;
- Fig. 11: eine diagrammatische Darstellung einer mittels der Sensoren erfassten Radialbeschleunigung in Abhängigkeit einer Frequenz für das zweite Rotorblattlager;
- Fig. 12: ein eine mittels der Sensoren erfasste Radialbeschleunigung in Abhängigkeit einer Winkelposition beschreibendes Orbitdiagramm für ein drittes Rotorblattlager der Windkraftanlage;
- Fig. 13: ein eine mittels der Sensoren erfasste Axialbeschleunigung in Abhängigkeit der Winkelposition beschreibendes Orbitdiagramm für das dritte Rotorblattlager;
- Fig. 14: ein eine mittels der Sensoren erfasste Tangentialbeschleunigung in Abhängigkeit der Winkelposition beschreibendes Orbitdiagramm für das dritte Rotorblattlager;
- Fig. 15: eine diagrammatische Darstellung einer mittels der Sensoren erfassten Radialbeschleunigung in Abhängigkeit einer Frequenz für das dritte Rotorblattlager;
- Fig. 16: eine schematische Darstellung eines Rotorblattlagers mit einem daran angeordneten, zwei Sensoren umfassenden Überwachungssystem;
- Fig. 17: diagrammatische Darstellungen von mittels des in der Fig. 16 gezeigten Überwachungssystems erfassten Sensorsignalen in Abhängigkeit einer Zeit.

Nachfolgend werden der Einfachheit halber gleiche Bezugszeichen für baugleiche bzw. funktionsgleiche Objekte verwendet.

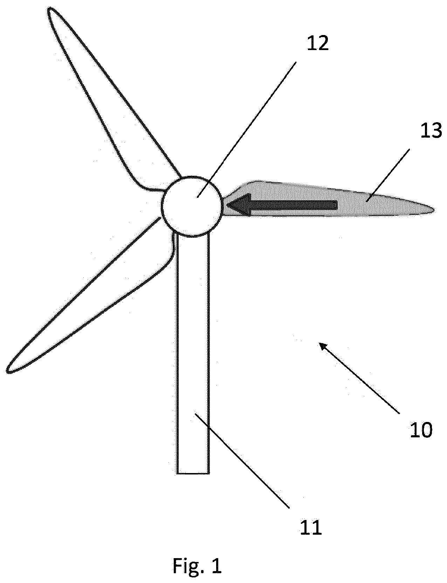

Die Fig. 1 zeigt eine Windkraftanlage 10, umfassend einen Turm 11, eine Rotornabe 12 und drei daran angeordnete Rotorblätter 13.

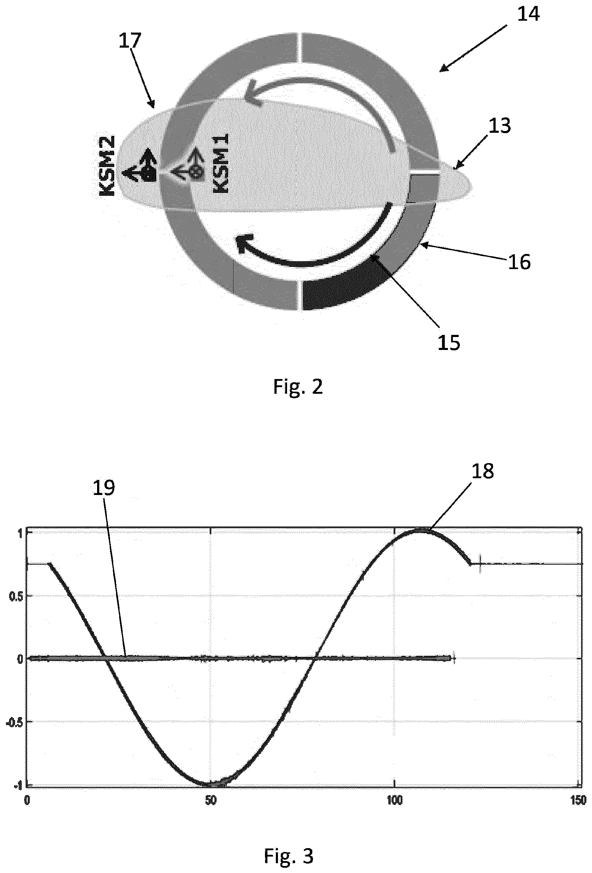

Die Fig. 2 zeigt schematisch ein Rotorblattlager 14 der Windkraftanlage 10 zur Verstellung eines Anstellwinkels eines der Rotorblätter 13. Je Rotorblatt 13 umfasst die Windkraftanlage 13 ein derartiges Rotorblattlager 14. Das Rotorblattlager 14 weist ein einen Innenring ausbildendes erstes Ringelement 15 und ein einen Außenring ausbildendes zweites Ringelement 16 auf, wobei das erste Ringelement 15 bezüglich des zweiten Ringelements 16 drehbar ist. Die Ringelemente 15, 16 sind hier nicht getrennt voneinander dargestellt. Das Rotorblatt 13 ist an dem ersten Ringelement 15 befestigt, so dass durch eine Drehung des ersten Ringelements 15 bezüglich des zweiten Ringelements 16 ein Anstellwinkel des Rotorblatts 13 verstellbar ist. An dem Rotorblattlager 14 ist ein Überwachungssystem 17 angeordnet, wobei an dem ersten Ringelement 15 ein Sensor KSM1 des Überwachungssystems 17 und an dem zweiten Ringelement 16 ein weiterer Sensor KSM2 des Überwachungssystems 17 angeordnet ist. Der weitere Sensor KSM2 ist übereinstimmend mit dem Sensor KSM1 ausgebildet. Mittels der als dreiachsige Beschleunigungssensoren ausgebildeten Sensoren KSM1, KSM2 sind während einer Drehung des ersten Ringelements bezüglich des zweiten Ringelements Schwingungen in dem Rotorblattlager 14 erfassbar. Weiter ist mit dem Sensor KSM1 ein Neigungswinkel bzw. ein Drehwinkel des ersten Ringelements 15 erfassbar. Die Erfassung des Drehwinkels erfolgt anhand einer Erfassung einer Änderung einer Ausrichtung des Sensors KSM1 in Bezug auf eine Richtung einer Gravitationskraft bzw. anhand einer Messung einer Änderung der Erdbeschleunigung. Je Rotorblattlager 14 umfasst das Überwachungssystem 17 zwei derartige Sensoren KSM1, KSM2.

Die Fig. 3 zeigt eine diagrammatische Darstellung einer mittels der Sensoren erfassten Radialbeschleunigung in Einheiten der Erdbeschleunigung g in Abhängigkeit einer Zeit in s. Eine Kurve 18 repräsentiert die mittels des Sensors KSM1 erfasste Radialbeschleunigung, während eine Kurve 19 die mittels des Sensors KSM2 erfasste Radialbeschleunigung repräsentiert. Da sich der Sensor KSM1 mit dem ersten Ringelement 15 mit dreht, weist die Kurve 18 im Gegensatz zu der Kurve 19 einen sinusartigen bzw. kosinusartigen Verlauf auf.

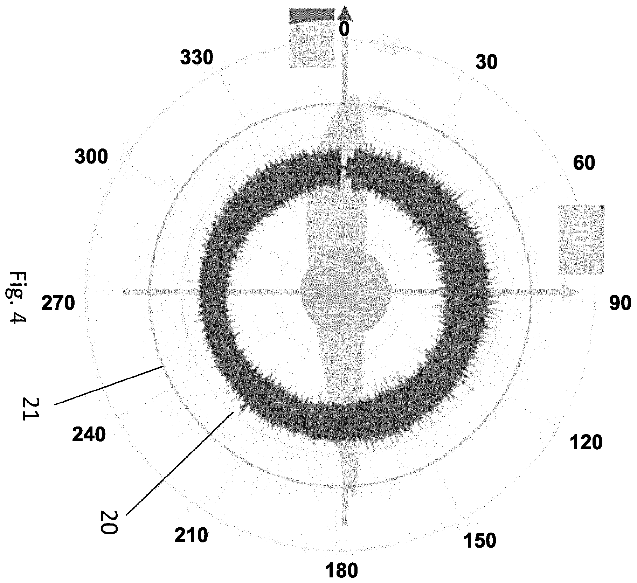

Die Fig. 4 zeigt ein eine mittels der Sensoren KSM1, KSM2 erfasste Radialbeschleunigung in Abhängigkeit einer Winkelposition beschreibendes Orbitdiagramm bei einem ersten Rotorblattlager 14 der Windkraftanlage 10.

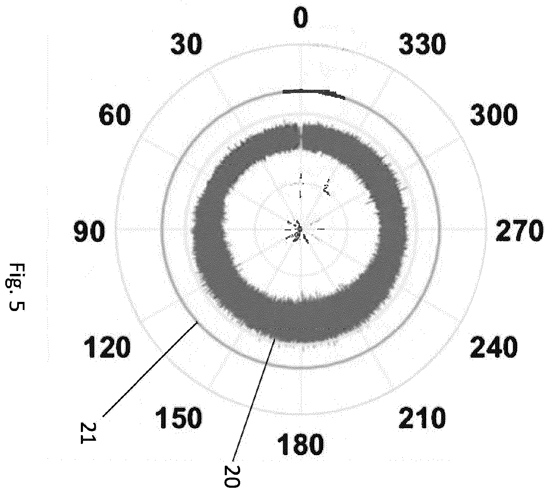

Die Fig. 5 zeigt ein eine mittels der Sensoren KSM1, KSM2 erfasste Axialbeschleunigung in Abhängigkeit der Winkelposition beschreibendes Orbitdiagramm bei dem ersten Rotorblattlager 14.

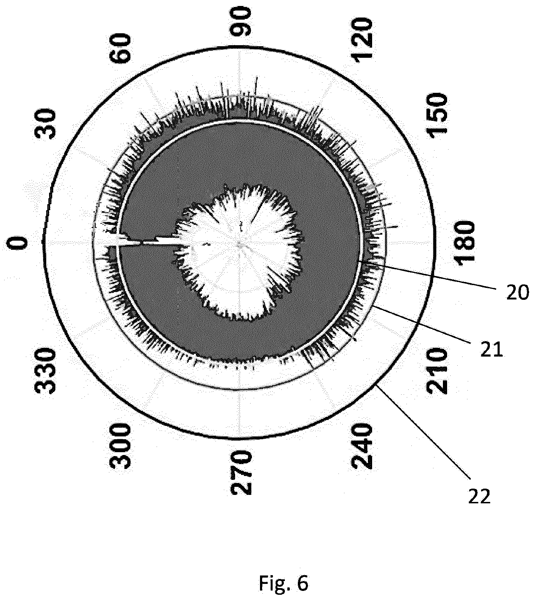

Die Fig. 6 zeigt ein eine mittels der Sensoren KSM1, KSM2 erfasste Tangentialbeschleunigung in Abhängigkeit der Winkelposition beschreibendes Orbitdiagramm bei dem ersten Rotorblattlager 14.

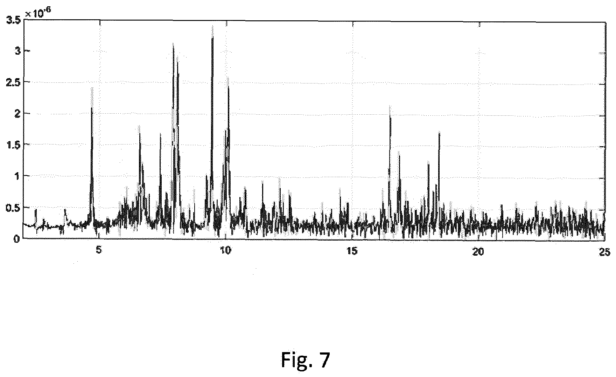

Die Fig. 7 zeigt eine diagrammatische Darstellung einer mittels der Sensoren KSM1, KSM2 erfassten Radialbeschleunigung in Einheiten der Erdbeschleunigung g in Abhängigkeit einer Frequenz in Hz bei dem ersten Rotorblattlager 14.

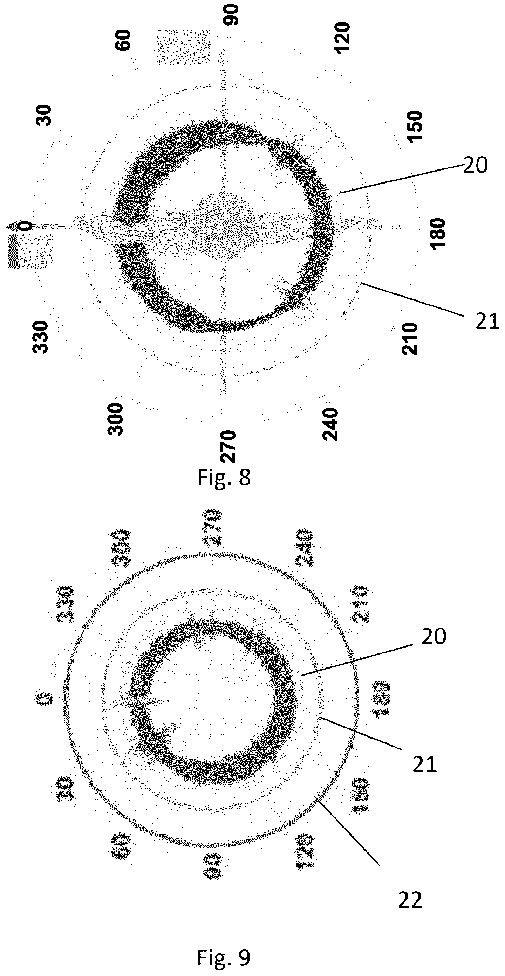

Die Fig. 8 zeigt ein eine mittels der Sensoren KSM1, KSM2 erfasste Radialbeschleunigung in Abhängigkeit einer Winkelposition beschreibendes Orbitdiagramm bei einem zweiten Rotorblattlager 14 der Windkraftanlage 10.

Die Fig. 9 zeigt ein eine mittels der Sensoren KSM1, KSM2 erfasste Axialbeschleunigung in Abhängigkeit der Winkelposition beschreibendes Orbitdiagramm bei dem zweiten Rotorblattlager 14.

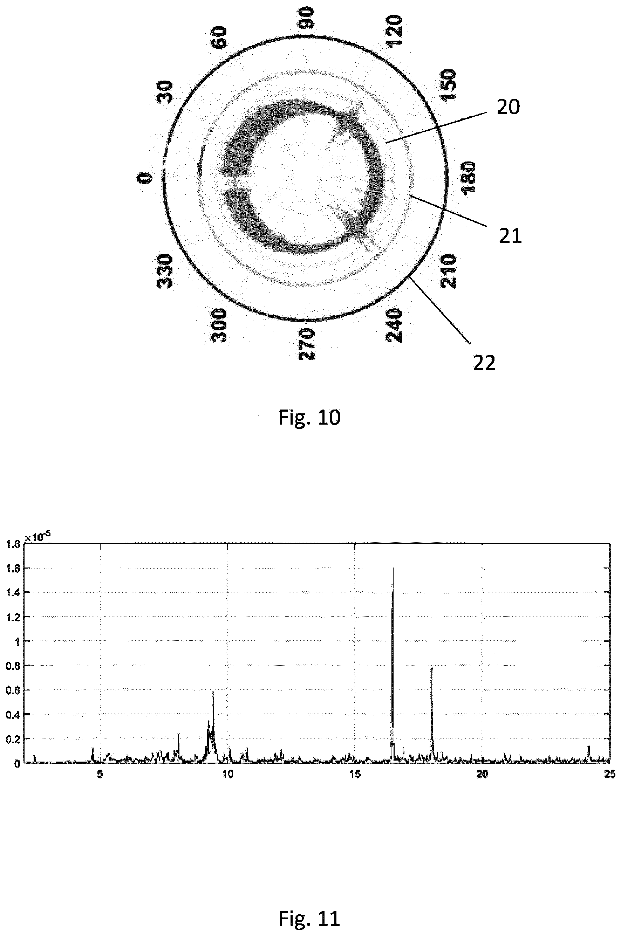

Die Fig. 10 zeigt ein eine mittels der Sensoren KSM1, KSM2 erfasste Tangentialbeschleunigung in Abhängigkeit der Winkelposition beschreibendes Orbitdiagramm bei dem zweiten Rotorblattlager 14.

Die Fig. 11 zeigt eine diagrammatische Darstellung einer mittels der Sensoren KSM1, KSM2 erfassten Radialbeschleunigung in Einheiten der Erdbeschleunigung g in Abhängigkeit einer Frequenz in Hz bei dem zweiten Rotorblattlager 14.

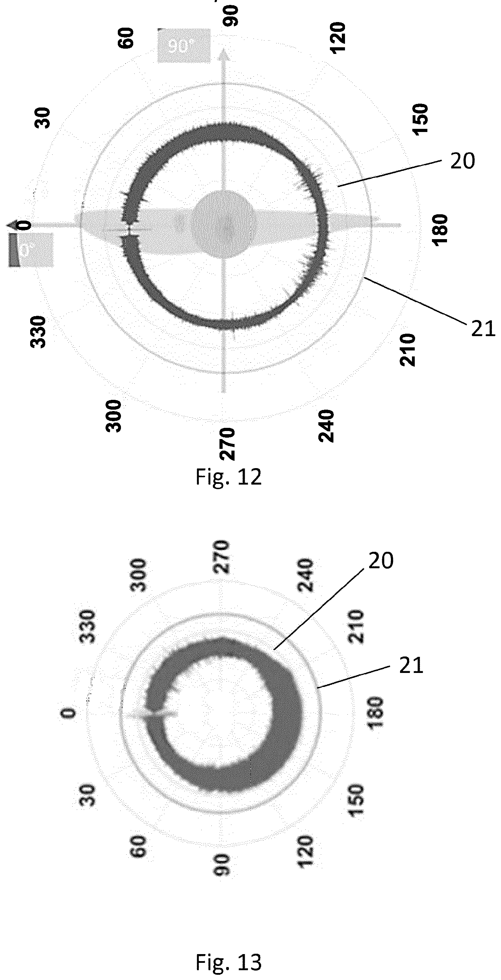

Die Fig. 12 zeigt ein eine mittels der Sensoren KSM1, KSM2 erfasste Radialbeschleunigung in Abhängigkeit einer Winkelposition beschreibendes Orbitdiagramm bei einem dritten Rotorblattlager 14 der Windkraftanlage 10.

Die Fig. 13 zeigt ein eine mittels der Sensoren KSM1, KSM2 erfasste Axialbeschleunigung in Abhängigkeit der Winkelposition beschreibendes Orbitdiagramm bei dem dritten Rotorblattlager 14.

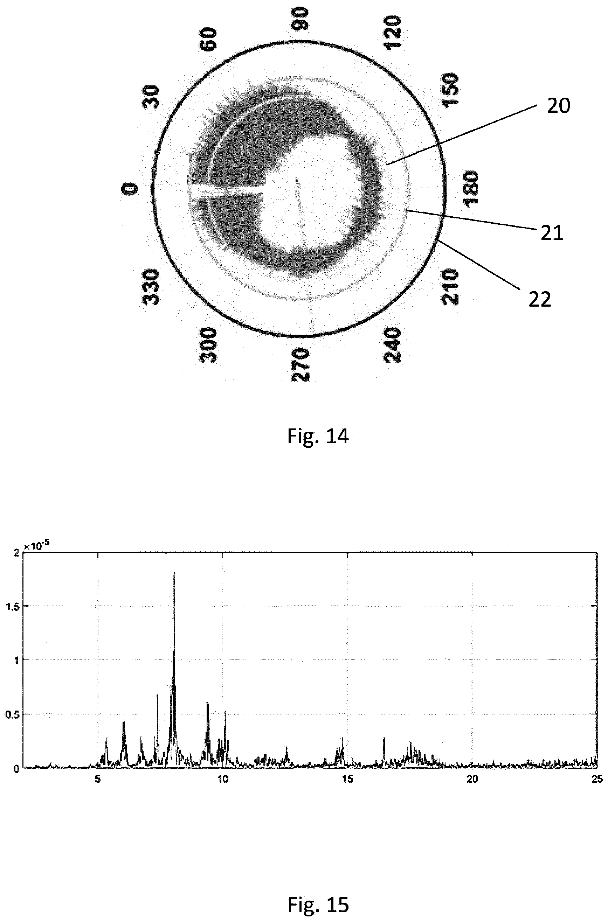

Die Fig. 14 zeigt ein eine mittels der Sensoren KSM1, KSM2 erfasste Tangentialbeschleunigung in Abhängigkeit der Winkelposition beschreibendes Orbitdiagramm bei dem dritten Rotorblattlager 14.

Die Fig. 15 zeigt eine diagrammatische Darstellung einer mittels der Sensoren KSM1, KSM2 erfassten Radialbeschleunigung in Einheiten der Erdbeschleunigung g in Abhängigkeit einer Frequenz in Hz bei dem dritten Rotorblattlager 14.

Das erste Ringelement 15 wurde bei einer Geschwindigkeit von ca. 3 °/s nur einmal um 360° gedreht, um die in den Fig. 3 bis 15 gezeigten Messdaten zu erhalten. Es wäre auch eine Drehung nur um 90° möglich. Die Sensoren KSM1, KSM2 können dann beide um 180° versetzt an dem ersten Ringelement 15 angeordnet werden.

Zum Erhalt der in den Fig. 3 bis 15 gezeigten Messdaten können Sensorsignale der Sensoren KSM1 und KSM2 geeignet gefiltert und überlagert werden oder umgekehrt. Die Zuordnung der jeweiligen Beschleunigung zu der Winkelposition ergibt sich aus der Erfassung der jeweiligen Beschleunigung in Abhängigkeit des Drehwinkels.

Kreislinien 20, 21, 22 in den Fig. 4 bis 6, 8 bis 10 und 12 bis 14 entsprechen Schwellenwerten. Liegt die jeweilige Beschleunigung zwischen den Kreislinien 20, 21, so liegen leichte Irregularitäten in den Messdaten vor. Ein weiterer Betrieb des jeweiligen Rotorblattlagers 14 ist möglich. Liegt die jeweilige Beschleunigung zwischen den Kreislinien 21, 22, so ist dies ein klares Anzeichen für Abnormalitäten und/oder Abweichungen in den Messdaten. Ein weiterer Betrieb des jeweiligen Rotorblattlagers 14 ist nur noch mit Einschränkungen möglich. Liegt die jeweilige Beschleunigung über der Kreislinie 22, so wurde ein erheblicher Schaden detektiert. Ein weiterer Betrieb des jeweiligen Rotorblattlagers 14 ist mit einem Risiko von Folgeschäden verbunden.

Die Fig. 4 bis 7 zeigen eine nahezu gleichmäßige Verteilung von Erregungen über einen Umfang des ersten Rotorblattlagers 14 mit leicht erhöhten Stößen in einer auffälligen Belastungszone des ersten Rotorblattlagers 14. Von auffälligen Frequenzmustern im Niederfrequenzbereich ist keine Spur zu sehen. Es gibt Anzeichen im Zeit- und Frequenzbereich auf leichte Abnormalitäten an dem ersten Rotorblattlager 14, die Laufbahnen und Wälzkörper des ersten Rotorblattlagers 14 betreffen. Ein weiterer Betrieb des ersten Rotorblattlagers 14 ist möglich. Eine Wiederholung der Überwachung des Zustands in ca. 15 bis 18 Monaten wird empfohlen.

Die Fig. 8 bis 11 zeigen eine ungleichmäßige Verteilung von Erregungen über einen Umfang des zweiten Rotorblattlagers 14 mit erhöhten Stößen in einer auffälligen Belastungszone des zweiten Rotorblattlagers 14 in Verbindung mit einem auffälligen Frequenzmuster im unteren Frequenzbereich. Es gibt Anzeichen im Zeit- und Frequenzbereich auf deutliche Abnormalitäten an dem zweiten Rotorblattlager 14, die die Laufbahnen und die Wälzkörper des zweiten Rotorblattlagers 14 betreffen. Ein weiterer Betrieb des zweiten Rotorblattlagers 14 ist möglich. Eine Wiederholung der Überwachung des Zustands in ca. 6 bis 9 Monaten wird empfohlen. Um eine Geschwindigkeit eines Fortschreitens der Abnormalitäten zu reduzieren, kann das zweite Rotorblattlager 14 nachgefettet werden.

Die Fig. 12 bis 15 zeigen eine ungleichmäßige Verteilung von Erregungen über einen Umfang des dritten Rotorblattlagers 14 mit erhöhten Stößen in einer auffälligen Belastungszone des dritten Rotorblattlagers 14 in Verbindung mit einem auffälligen Frequenzmuster im unteren Frequenzbereich. Es gibt Anzeichen im Zeit- und Frequenzbereich von Schäden an dem dritten Rotorblattlager 14, die die Laufbahnen und die Wälzkörper des dritten Rotorblattlagers 14 betreffen. Ein weiterer Betrieb des dritten Rotorblattlagers 14 ist mit einem Risiko von Folgeschäden verbunden.

Es wird empfohlen, das dritte Rotorblattlager 14 innerhalb von ca. 6 bis 9 Monaten auszutauschen. Insofern ein Austausch des dritten Rotorblattlagers 14 innerhalb des empfohlenen Zeitraums nicht möglich ist, kann eine Geschwindigkeit eines Fortschreitens der Schäden durch Nachfetten reduziert werden.

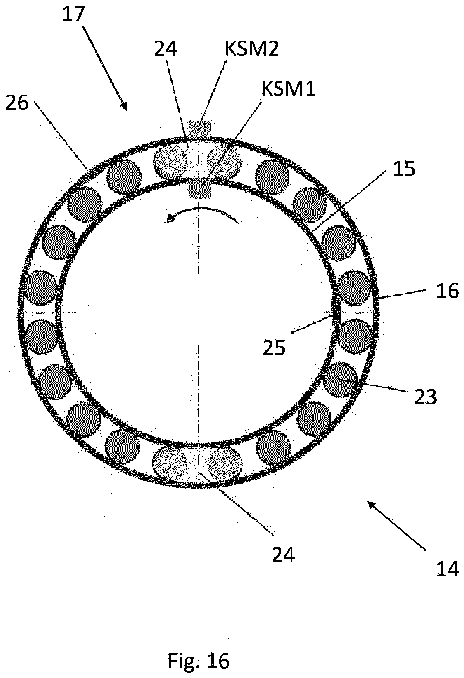

Die Fig. 16 zeigt ein Rotorblattlager 14. Das Rotorblattlager 14 weist ein einen Innenring ausbildendes erstes Ringelement 15 und ein einen Außenring ausbildendes zweites Ringelement 16 auf, wobei das erste Ringelement 15 bezüglich des zweiten Ringelements 16 drehbar ist. Zwischen dem ersten Ringelement 15 und dem zweiten Ringelement 16 sind Wälzkörper 23 des Rotorblattlagers 14 angeordnet. An dem Rotorblattlager 14 ist ein Überwachungssystem 17 angeordnet, wobei an dem ersten Ringelement 15 ein Sensor KSM1 des Überwachungssystems 17 und an dem zweiten Ringelement 16 ein weiterer Sensor KSM2 des Überwachungssystems 17 angeordnet ist. Bereiche 24 markieren eine Lastzone. Ein Bereich 25 bzw. 26 markiert einen Schaden an einer Laufbahn des ersten Ringelements 15 bzw. zweiten Ringelements 16.

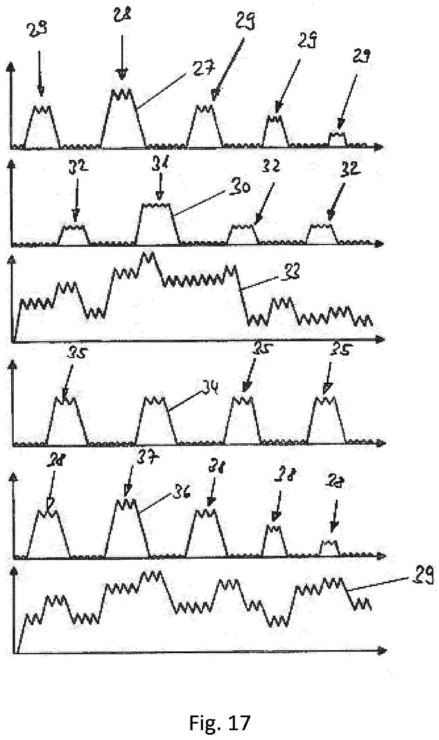

Die Fig. 17 zeigt diagrammatische Darstellungen von mittels des in der Fig. 16 gezeigten Überwachungssystems 17 erfassten Sensorsignalen in Abhängigkeit einer Zeit.

Eine Kurve 27 repräsentiert ein Signal des Sensors KSM1, welches von dem durch den Bereich 26 markierten Schaden herrührt. Ein Peak 28 der Kurve 27 repräsentiert ein gleichzeitiges Passieren des Sensors KSM1 und eines Wälzkörpers 23 an dem durch den Bereich 26 markierten Schaden. Weitere Peaks 29 der Kurve 27 repräsentieren ein Passieren nur der Wälzkörper 23 an dem durch den Bereich 26 markierten Schaden. Die dem Peak 28 nachfolgenden Peaks 29 werden sukzessive kleiner, da sich der Sensor KSM1 graduell von dem durch den Bereich 26 markierten Schaden wegbewegt.

Eine Kurve 30 repräsentiert ein Signal des Sensors KSM1, welches von dem durch den Bereich 25 markierten Schaden herrührt. Ein Peak 31 der Kurve 30 repräsentiert ein Passieren eines Wälzkörpers 23 an dem durch den Bereich 25 markierten Schaden in der Lastzone. Weitere Peaks 32 der Kurve 30 repräsentieren ein Passieren der Wälzkörper 23 an dem durch den Bereich 25 markierten Schaden außerhalb der Lastzone.

Eine Kurve 33 repräsentiert eine Überlagerung der durch die Kurven 27, 30 repräsentierten Signale.

Eine Kurve 34 repräsentiert ein Signal des Sensors KSM2, welches von dem durch den Bereich 26 markierten Schaden herrührt. Peaks 35 der Kurve 34 repräsentieren ein Passieren der Wälzkörper 23 an dem durch den Bereich 26 markierten Schaden.

Eine Kurve 36 repräsentiert ein Signal des Sensors KSM2, welches von dem durch den Bereich 25 markierten Schaden herrührt. Ein Peak 37 der Kurve repräsentiert ein Passieren eines Wälzkörpers 23 an dem durch den Bereich 25 markierten Schaden in der Lastzone. Weitere Peaks 38 der Kurve 36 repräsentieren ein Passieren der Wälzkörper 23 an dem durch den Bereich 25 markierten Schaden. Die dem Peak 37 nachfolgenden Peaks 38 werden sukzessive kleiner, da sich der durch den Bereich 25 markierte Schaden graduell von dem Sensor KSM2 wegbewegt.

Eine Kurve 39 repräsentiert eine Überlagerung der durch die Kurven 34, 36 repräsentierten Signale.

### Bezugszeichenliste

- 10: Windkraftanlage
- 11: Turm
- 12: Rotornabe
- 13: Rotorblatt
- 14: Rotorblattlager
- 15: erstes Ringelement
- 16: zweites Ringelement
- 17: Überwachungssystem
- 18: Kurve
- 19: Kurve
- 20: Kreislinie
- 21: Kreislinie
- 22: Kreislinie
- 23: Wälzkörper
- 24: Bereich
- 25: Bereich
- 26: Bereich
- 27: Kurve
- 28: Peak
- 29: Peak
- 30: Kurve
- 31: Peak
- 32: Peak
- 33: Kurve
- 34: Kurve
- 35: Peak
- 36: Kurve
- 37: Peak
- 38: Peak
- 39: Kurve

- KSM1: Sensor
- KSM2: Sensor

## Patentansprüche

1. Überwachungssystem (17) zur Überwachung eines Zustands eines Rotorblattlagers (14) und/oder Azimutlagers bei einer Windkraftanlage (10), umfassend zumindest einen Sensor (KSM1), welcher an einem ersten Ringelement (15) des Lagers, welches bezüglich eines zweiten Ringelements (16) des Lagers drehbar ist, anordbar ist, wobei mittels des Sensors während einer Drehung des ersten Ringelements bezüglich des zweiten Ringelements Schwingungen in dem Lager erfassbar sind, wobei anhand einer Analyse der erfassten Schwingungen der Zustand des Lagers ermittelbar ist,
**dadurch gekennzeichnet,**
**dass** mittels des Sensors ein Drehwinkel des ersten Ringelements erfassbar ist.

2. Überwachungssystem nach Anspruch 1,
**dadurch gekennzeichnet,**
**dass** der Sensor (KSM1) als ein Beschleunigungssensor ausgebildet ist, wobei der Beschleunigungssensor ein Gehäuse und zumindest drei in dem Gehäuse angeordnete Beschleunigungssensormittel zur Erfassungen von Beschleunigungen bezüglich dreier Achsen aufweist.

3. Überwachungssystem nach Anspruch 2,
**dadurch gekennzeichnet,**
**dass** zumindest eines der Beschleunigungssensormittel als ein MEMS-Sensormittel ausgebildet ist, wobei mittels des MEMS-Sensormittels der Drehwinkel erfassbar ist.

4. Überwachungssystem nach einem der vorangehenden Ansprüche,
**dadurch gekennzeichnet,**
**dass** der Sensor (KSM1) eine Energieversorgungseinrichtung zur Versorgung des Sensors mit elektrischer Energie aufweist.

5. Überwachungssystem nach einem der vorangehenden Ansprüche,
**dadurch gekennzeichnet,**
**dass** der Sensor (KSM1) eine Speichereinrichtung zum Speichern von Sensordaten und/oder eine Datenschnittstelleneinrichtung zur, vorzugsweise kabellosen, Übertragung von Sensordaten und/oder eine Auswerteeinrichtung zum Auswerten von Sensordaten aufweist.

6. Überwachungssystem nach einem der vorangehenden Ansprüche,
**dadurch gekennzeichnet,**
**dass** das Überwachungssystem (17) zumindest einen weiteren Sensor (KSM2) zur Erfassung der Schwingungen umfasst, welcher an dem zweiten Ringelement (16) anordbar ist, wobei vorzugsweise der weitere Sensor übereinstimmend mit dem Sensor (KSM1) ausgebildet ist.

7. Windkraftanlage (10), umfassend einen Turm (11), eine an dem Turm angeordnete Gondel, ein Azimutlager, über welches die Gondel drehbar an dem Turm gelagert ist, und einen Rotor, wobei der Rotor eine Rotornabe (12), zumindest ein an der Rotornabe angeordnetes Rotorblatt (13) und zumindest ein Rotorblattlager (14) umfasst, über welches das Rotorblatt drehbar an der Rotornabe gelagert ist,
**dadurch gekennzeichnet,**
**dass** die Windkraftanlage ein Überwachungssystem (17) nach einem der vorangehenden Ansprüche umfasst.

8. Verfahren zur Überwachung eines Zustands eines Rotorblattlagers (14) und/oder Azimutlagers bei einer Windkraftanlage (10), wobei, vorzugsweise während einer Nichtdrehung eines ersten Ringelements (15) des Lagers, welches bezüglich eines zweiten (16) Ringelements des Lagers drehbar ist, bezüglich des zweiten Ringelements, zur Anregung von Schwingungen in dem Lager mittels eines Impulshammers ein Impuls in das Lager eingeleitet wird, wobei mittels zumindest eines an dem Lager angeordneten Sensors (KSM1, KSM2) die Schwingungen erfasst werden, wobei anhand einer Analyse der erfassten Schwingungen der Zustand des Lagers ermittelt wird.

9. Verfahren nach Anspruch 8,
**dadurch gekennzeichnet,**
**dass** bei der Analyse der erfassten Schwingungen zumindest eine Eigenfrequenz des Lagers (14), vorzugsweise des Lagers (14) zusammen mit verbundenen Strukturelementen bestimmt wird.

10. Verfahren zur Überwachung eines Zustands eines Rotorblattlagers (14) und/oder Azimutlagers bei einer Windkraftanlage (10) mittels eines Überwachungssystems (17), wobei mittels zumindest eines Sensors (KSM1) des Überwachungssystems, welcher an einem ersten Ringelement (15) des Lagers, welches bezüglich eines zweiten Ringelements (16) des Lagers drehbar ist, angeordnet ist, während einer Drehung des ersten Ringelements bezüglich des zweiten Ringelements Schwingungen in dem Lager erfasst werden, wobei anhand einer Analyse der erfassten Schwingungen der Zustand des Lagers ermittelt wird,
**dadurch gekennzeichnet,**
**dass** mittels des Sensors ein Drehwinkel des ersten Ringelements erfasst wird.

11. Verfahren nach Anspruch 10,
**dadurch gekennzeichnet,**
**dass** bei der Erfassung der Schwingungen eine Schwingbeschleunigung in einer radialen Richtung des Lagers (14) und/oder eine Schwingbeschleunigung in einer axialen Richtung des Lagers und/oder eine Schwingbeschleunigung in einer tangentialen Richtung des Lagers erfasst wird.

12. Verfahren nach Anspruch 11,
**dadurch gekennzeichnet,**
**dass** bei der Analyse der erfassten Schwingungen eine jeweilige Amplitude der jeweiligen Schwingbeschleunigung in Abhängigkeit einer Winkelposition bezogen auf das Lager mit einem jeweiligen Schwellenwert verglichen wird, wobei dadurch, dass die jeweilige Amplitude den jeweiligen Schwellenwert bei einer bestimmten Winkelposition und/oder in einem bestimmten Winkelpositionsbereich überschreitet, ein Vorhandensein einer Verschleißerscheinung, insbesondere Schaden, an dem Lager (14) bei der bestimmten Winkelposition und/oder in dem bestimmten Winkelpositionsbereich erkannt wird.

13. Verfahren nach einem der Ansprüche 10 bis 12,
**dadurch gekennzeichnet,**
**dass** bei der Analyse der erfassten Schwingungen zumindest eine Eigenfrequenz des Lagers (14) bestimmt und mit einem, vorzugsweise mittels eines Impulshammertests bestimmten, Referenzwert verglichen wird.

14. Verfahren nach einem der Ansprüche 10 bis 13,
**dadurch gekennzeichnet,**
**dass** das erste Ringelement (15) zumindest um 90°, bevorzugt zumindest um 180 °, besonders bevorzugt um 360°, bezüglich des zweiten Ringelements (16) gedreht wird.

15. Verwendung eines Überwachungssystems (17) zur Überwachung eines Zustands eines Rotorblattlagers (14) und/oder Azimutlagers bei einer Windkraftanlage (10), umfassend zumindest einen Sensor (KSM1), welcher an einem ersten Ringelement (15) des Lagers, welches bezüglich eines zweiten Ringelements (16) des Lagers drehbar ist, anordbar ist, wobei mittels des Sensors während einer Drehung des ersten Ringelements bezüglich des zweiten Ringelements Schwingungen in dem Lager erfassbar sind, wobei anhand einer Analyse der erfassten Schwingungen der Zustand des Lagers ermittelbar ist,
**dadurch gekennzeichnet,**
**dass** mittels des Sensors ein Drehwinkel des ersten Ringelements erfassbar ist.
